# FASCICULE DE BREVET EUROPEEN

(11) **EP 3 639 972 B1**
(45) Date de publication et mention de la délivrance du brevet: **24.05.2023**
(21) Numéro de dépôt: 18201036.3
(22) Date de dépôt: 17.10.2018
(51) Int. Cl.: B23Q 17/00, G04D 1/00

(54) **PRÉHENSEUR UNIVERSEL POUR RONDELLES D'HORLOGERIE**
UNIVERSALGREIFER FÜR SCHEIBEN VON UHREN
UNIVERSAL GRIPPER FOR TIMEPIECE WASHERS

(43) Date de publication de la demande: 22.04.2020
(73) Titulaire: ETA SA Manufacture Horlogère Suisse, 2540 Grenchen (CH)
(72) Inventeur: LOEFFEL, Raphaël, 2525 Le Landeron (CH); SENN, Jean-Philippe, 2525 Le Landeron (CH)
(74) Mandataire: ICB SA

(56) Documents cités:
- EP-A1- 1 454 691
- EP-A1- 2 187 273
- FR-A- 1 366 810
- FR-A1- 2 168 286
- JP-A- 2013 082 041
- JP-A- 2016 032 865

## Description

### Domaine de l'invention

L'invention concerne un préhenseur universel pour rondelles d'horlogerie, agencé pour être fixé ou intégré à un moyen de manutention ou à un bras de robot, et comportant une pince avec une pluralité de mors mobiles radialement de façon concentrique autour d'un axe principal et qui sont saillants par rapport à un plateau d'appui que comporte ledit préhenseur et qui est mobile selon la direction dudit axe principal, chaque dit mors comportant au moins une première surface radiale agencée pour un appui radial sur le chant d'une rondelle, ledit plateau d'appui comportant au moins une première surface axiale agencée pour un appui axial sur une surface plate d'une rondelle, et chaque dit mors étant mobile radialement, perpendiculairement à la direction dudit axe principal.

L'invention concerne encore un moyen de manutention pour rondelles d'horlogerie, incorporant au moins un tel préhenseur.

L'invention concerne encore un posage pour rondelles d'horlogerie, adapté pour un tel préhenseur.

L'invention concerne encore l'utilisation d'un tel moyen de manutention pour le chassage et/ou le déchassage d'une rondelle d'un sous-ensemble horloger sans déformation de ladite rondelle.

L'invention concerne le domaine de la manutention de petits composants de type rondelle dans une fabrication automatisée d'horlogerie à grande cadence, en particulier pour la production d'ébauches.

### Arrière-plan de l'invention

La fabrication d'ébauches d'horlogerie utilise comme matières premières des rondelles, de dimensions très variées, en diamètre comme en épaisseur, et dans des matériaux qui peuvent être assez différents. L'usinage flexible moderne tend à substituer aux grandes séries d'autrefois des lots de fabrication de taille beaucoup plus réduite, voire unitaire. L'alimentation des moyens de production doit donc être complètement repensée pour s'adapter à une fourniture très diversifiée en amont, pour la réalisation d'une production encore plus diversifiée en aval.

Comme pour les machines de production, le temps de réglage pour un changement de production est le paramètre qu'il importe de réduire par tous les moyens imaginables, de façon justement à permettre une réduction des tailles de lots au niveau de la production.

Les cadences de manutention des rondelles sont très élevées, avec un cycle complet de quelques secondes entre ouverture et fermeture, ce qui ne laisse qu'une durée de une à deux secondes au préhenseur de la rondelle.

Ces cadences élevées ne sont pas compatibles avec l'inertie et la lenteur de gros manipulateurs, et les manipulateurs du commerce aptes à effectuer la prise et la dépose de rondelles ne sont pas aptes à assurer ces cadences tout en étant assez polyvalents pour des changements de produits instantanés.

Certains documents décrivent des appareillages de manutention aptes à manutentionner de tels composants, comme JP2013 082041 SEIKO EPSON, EP1454691 WILLEMIN MACHINES, EP2187273 ALMAC, ou FR1366810 HUGUENIN.

### Résumé de l'invention

A cet effet, l'invention se propose de développer un préhenseur flexible, pour la prise et la dépose de rondelles de types variés, apte à des fréquences élevées, et capable d'assurer un effort résistant constant à l'encontre d'un manipulateur antagoniste tel qu'un robot, et permettant une adaptation immédiate à un changement de dimensions de rondelles.

A cet effet, l'invention concerne un préhenseur pour rondelles d'horlogerie selon la revendication 1, notamment pour l'alimentation d'un robot, d'un centre d'usinage, ou de tout moyen de production.

L'invention concerne encore un moyen de manutention pour rondelles d'horlogerie, incorporant au moins un tel préhenseur.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée, et en perspective, un préhenseur selon l'invention, vu du côté comportant un plateau d'appui entouré par un jeu de mors concentriques ;
- la figure 2 représente, en vue de côté, le préhenseur de la figure 1, en position de prise pour charge sur un posage, et serrant entre ses mors le chant d'une rondelle qui est également en appui sur une surface d'appui du plateau d'appui ;
- la figure 3 représente, de façon similaire à la figure 2, une prise pour décharge de posage, et montre la coopération de doigts, que comportent les mors, avec une gorge du posage dans laquelle ils sont introduits, pour la saisie d'une rondelle par sa face inférieure et son extraction du posage;
- la figure 4 représente, en vue de côté, un des mors représentés aux figures 1 à 3 ;
- la figure 5 représente une autre variante de mors combiné avec doigt et bec, pour des utilisations particulières ;

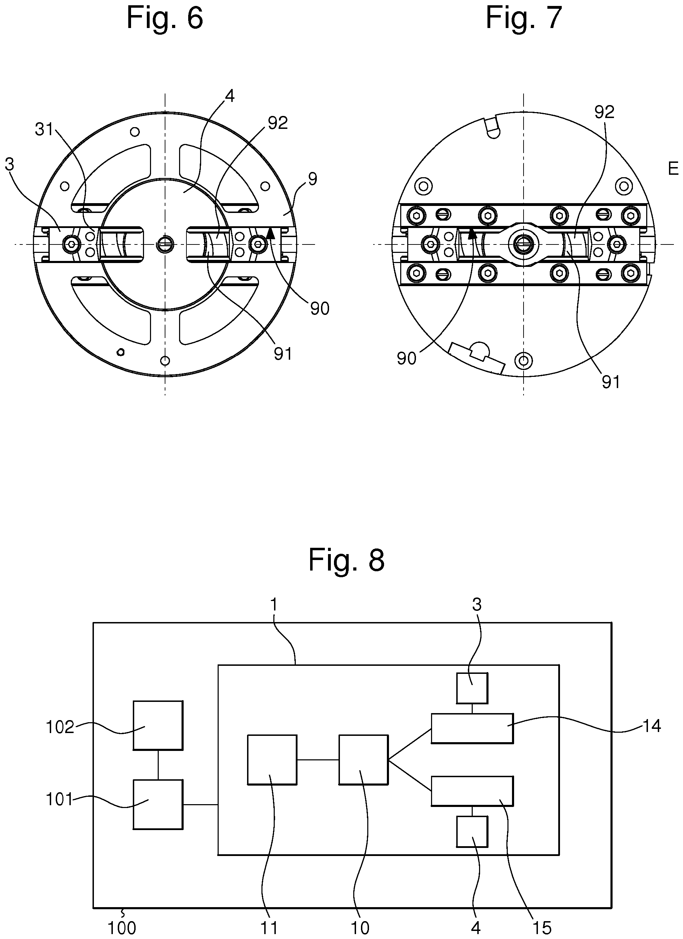

- la figure 6 est une vue de bout du préhenseur ;
- la figure 7 est une vue similaire à la figure 6, et où le plateau d'appui a été déposé ;
- la figure 8 est un schéma-blocs représentant un moyen de manutention avec un robot et un bras de robot porteur d'au moins un préhenseur, et des moyens de vision et des moyens de commande.

### Description détaillée des modes de réalisation préférés

L'invention concerne un préhenseur flexible 1, pour la prise et la dépose de rondelles de types variés, pour la réalisation d'ébauches d'horlogerie ou similaires. Ce préhenseur 1 est apte à des fréquences élevées, et est capable d'assurer un effort résistant constant à l'encontre d'un manipulateur antagoniste tel qu'un robot, et permet une adaptation immédiate à un changement de dimensions de rondelles, dans le cadre d'une production flexible.

Le préhenseur 1 est conçu pour saisir tous les types de rondelles d'une production particulière, sur différents types de systèmes d'alimentation, et de les déposer sur différents types de posage d'usinage, avec une certaine force verticale, de préférence tarée, et de préférence inférieure ou égale à 300 N. Le même préhenseur permet également de saisir toutes ces rondelles sur ces mêmes posages d'usinage, sans devoir utiliser un système d'extraction par-dessous, et de les déposer sur un système de sortie.

Les figures illustrent une réalisation non limitative adaptée à la manutention de rondelles d'ébauches horlogères qui ont des diamètres compris entre 10 mm et 80 mm, et des épaisseurs comprises entre 0.5 mm et 10.0 mm.

Ce préhenseur 1 universel pour rondelles d'horlogerie est agencé pour être fixé ou intégré à un moyen de manutention ou à un bras de robot, et comporte une pince 2 avec une pluralité de mors 3 mobiles radialement de façon concentrique autour d'un axe principal D. Ces mors 3 sont saillants par rapport à un plateau d'appui 4 que comporte le préhenseur 1, lequel plateau d'appui 4 est mobile selon la direction de l'axe principal D.

L'invention est illustrée sur les figures avec deux mors 3 diamétralement opposés, guidés dans des glissières 90 et coopérant avec une came hélicoïdale 92 que comporte classiquement un rotor 91. Naturellement le préhenseur 1 peut comporter un nombre supérieur de mors 3, la configuration à deux mors est toutefois particulièrement avantageuse en raison de sa masse réduite, il s'agit en effet de réaliser un préhenseur d'encombrement inférieur à celui des manipulateurs du commerce, et d'inertie plus faible que ceux-ci, tout en assurant un fonctionnement de qualité et la résistance à un effort de chassage de 300 N.

Plus particulièrement, chaque mors 3 comporte au moins une première surface radiale 5, qui est agencée pour un appui radial sur le chant d'une rondelle. Et le plateau d'appui 4 comporte au moins une première surface axiale 41, qui est agencée pour un appui axial sur une surface plate d'une rondelle. Chaque mors 3 est mobile radialement, perpendiculairement à la direction de l'axe principal D.

Selon l'invention, chaque mors 3 est aussi mobile axialement selon la direction de l'axe principal D par rapport au plateau d'appui 4, ou inversement.

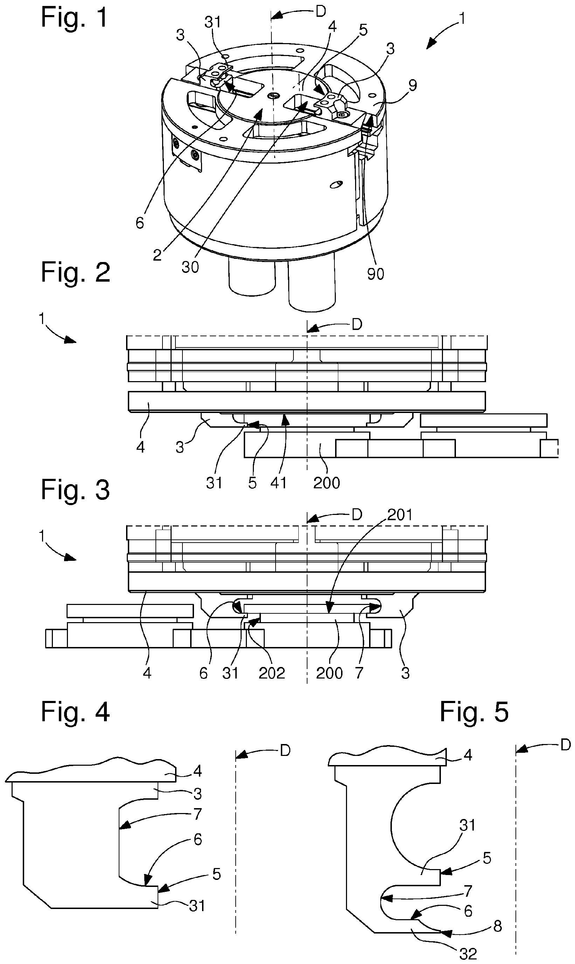

Plus particulièrement, chaque mors 3 comporte au moins une deuxième surface axiale 6, qui est agencée pour un appui axial sur une surface plate d'une rondelle, tel que visible sur la figure 3. Plus particulièrement, chaque mors 3 comporte une surface de centrage 7, entre la deuxième surface axiale 6 et le plateau d'appui 4.

Plus particulièrement, tous les mors 3 sont agencés pour saisir une même rondelle au niveau d'un même plan perpendiculaire à l'axe principal D. Plus particulièrement, toutes les premières surfaces radiales 5 sont agencées pour saisir une même rondelle au niveau d'un même plan perpendiculaire à l'axe principal D.

Plus particulièrement, toutes les deuxièmes surfaces axiales 6 sont agencées pour saisir une même rondelle au niveau d'un même plan perpendiculaire à l'axe principal D.

Plus particulièrement, tel que visible sur les figures 1 à 4, chaque mors 3 comporte un premier doigt 31 unique saillant radialement vers l'axe principal D et comportant une première surface radiale 5, et comportant une deuxième surface axiale 6 entre la première surface radiale 5 et le plateau d'appui 4.

Plus particulièrement, tous les mors 3 sont identiques et coplanaires selon un plan perpendiculaire à l'axe principal D.

Plus particulièrement, le préhenseur 1 ne comporte que deux mors 3 identiques, coplanaires selon un plan perpendiculaire à l'axe principal D et diamétralement opposés par rapport à l'axe principal D.

Ainsi, grâce à la forme spécifique des doigts des mors 3, la fonction de prise des rondelles peut être réalisée sur la tranche des rondelles, ce qui correspond au cas réel général lors de la prise des rondelles sur un système d'alimentation, ou bien par-dessous les rondelles, ce qui constitue le cas réel général lors de la prise des rondelles sur le posage d'usinage.

Dans la variante de la figure 5, chaque mors 3 comporte un premier doigt 31 saillant radialement vers l'axe principal D et comportant une première surface radiale 5, et, du côté du premier doigt 31 opposé au plateau d'appui 4, et à une distance du premier doigt 31 supérieure à l'épaisseur maximale des rondelles à manipuler, un deuxième doigt 32 saillant radialement vers l'axe principal D et comportant une deuxième surface axiale 6 tournée vers le premier doigt 31. Plus particulièrement, ce deuxième doigt 32 est délimité, vers l'axe principal D, par un bec pointu 8 agencé pour séparer une rondelle d'un posage 200 ou d'une pile de rondelles lors d'un mouvement radial centripète du mors 3, le bec pointu 8 étant à plus grande distance de l'axe principal D que la première surface radiale 5.

Les mors 3 sont agencés pour maintenir une rondelle en appui sur le plateau d'appui 4, et pour exercer un effort résistant à la poussée ou à la traction exercée par un robot.

Plus particulièrement, la course axiale du plateau d'appui 4 est réglable pour s'adapter à chaque type de rondelle ou à chaque épaisseur de rondelle. Le plateau d'appui 4 est ainsi agencé pour compenser des différences d'épaisseur de différentes rondelles d'un lot de production.

Plus particulièrement, la course axiale relative entre les mors 3 et le plateau d'appui 4 est réglable pour s'adapter à chaque épaisseur de rondelle.

Plus particulièrement, le préhenseur 1 comporte des moyens de manoeuvre axiaux du plateau d'appui 4 selon la direction de l'axe principal D pour maintenir le plateau d'appui 4 sur un posage avec un effort taré et inférieur ou égal à 300 N, et qui sont avantageusement combinés avec au moins un capteur de force selon l'axe principal D qui est agencé pour mesurer l'effort en traction et/ou compression, et le comparer au effort taré ou à la valeur de 300N.

Ainsi, grâce à son plateau d'appui 4 réglable en hauteur, le préhenseur 1 est capable de traiter toutes les épaisseurs de rondelles du spectre de la production, la position du plateau étant adaptable à l'épaisseur de chaque rondelle. Cette fonction permet, de plus, un appui important sur la surface de la rondelle, de manière à supporter l'effort maximal de 300 N de force de chassage sans déformer la rondelle.

Plus particulièrement, le préhenseur 1 comporte des commandes électriques 10 pour la manoeuvre radiale des mors 3, et pour la manoeuvre axiale du plateau d'appui 4.

De façon plus particulièrement, le préhenseur 1 comporte des commandes électriques 10 pour la manoeuvre axiale des mors 3.

Plus particulièrement, le préhenseur 1 comporte au moins un encodeur pour un moteur que comporte une commande électrique 10, pour l'adaptation de l'épaisseur et/ou du diamètre d'une rondelle, agencé pour donner aux commandes électriques 10 des instructions de course minimale et maximale.

Plus particulièrement, le préhenseur 1 comporte des moyens de mesure 11 pour l'adaptation de l'épaisseur et/ou du diamètre d'une rondelle, agencés pour donner aux commandes électriques 10 des instructions de course minimale et maximale.

Plus particulièrement, les commandes électriques 10 sont paramétrables en position et/ou en vitesse et/ou en accélération et/ou en couple et/ou en force d'appui.

Plus particulièrement, les commandes électriques 10 sont agencées pour effectuer un mouvement consistant à écarter radialement les mors 3 pour déposer une rondelle sur un posage, et à déplacer axialement le plateau d'appui 4 selon la direction de l'axe principal D, pour compenser les différences d'épaisseur entre les différentes rondelles.

Plus particulièrement, les commandes électriques 10 sont agencées pour effectuer un mouvement séquentiel consistant à effectuer l'écartement radial des mors 3 pour déposer une rondelle sur un posage, et pour déplacer axialement le plateau d'appui 4.

Dans la variante particulière illustrée par les figures, le préhenseur 1 est entièrement électrique, tous les mouvements des mors 3 et du plateau d'appui 4 sont contrôlables électriquement, donc paramétrables numériquement par calibre ou par type d'ébauche (position, vitesses, accélération, forces, et autres).

Dans la réalisation particulière illustrée par les figures, la motorisation comporte deux moteurs équipés chacun de réducteur et d'encodeur, le premier moteur 14 réalise le mouvement des deux mors 3, et le second moteur 15 réalise le mouvement du plateau d'appui 4. Ces moteurs sont asservis en position par un ordre venant d'une commande programmable, les positions font partie d'une recette (jeu de paramètres) qui est spécifique au calibre à traiter. Chaque moteur est équipé d'un driveur qui permet la communication avec cette commande programmable.

La combinaison électrique des deux mouvements, des mors 3, et du plateau d'appui 4, ainsi que la géométrie des éléments mécaniques, autorisent des fonctions avantageuses.

L'invention concerne encore un moyen de manutention 100 de rondelles d'horlogerie, comportant au moins un tel préhenseur 1.

Selon l'invention, ce moyen de manutention 100 comporte au moins un robot 102 avec un bras de robot 101 porteur d'au moins un préhenseur 1, et ce robot 102, ainsi équipé, est agencé pour chasser ou déchasser une rondelle par un mouvement selon la direction de l'axe principal D.

Plus particulièrement, le moyen de manutention 100 comporte au moins un moyen de vision, qui est agencé pour identifier la face supérieure ou inférieure d'une ébauche en amont du préhenseur 1 et pour commander une manoeuvre de retournement par un manipulateur annexe, et/ou pour déterminer l'orientation angulaire d'une ébauche en amont du préhenseur 1 selon la position d'une encoche et/ou de perçages que comporte la rondelle et pour commander une manoeuvre de rotation angulaire par un manipulateur annexe, et/ou pour lire sur une rondelle en amont du préhenseur 1 un marquage d'identification pour déclencher des paramètres de fonctionnement du préhenseur 1. Dans un agencement particulier, le moyen de manutention 100 comporte trois caméras, chacune dédiée à l'une de ces fonctions, disposées l'une après l'autre en aval d'une station d'alimentation comportant par exemple un bol vibrant et au moins un tapis, et permettent de déclencher si nécessaire des mouvements de retournement, et aussi d'effectuer un pré-positionnement angulaire, tout en identifiant le type de rondelle sans risque d'erreur.

L'invention ne concerne pas un posage 200 pour rondelles d'horlogerie, agencé pour une manipulation de rondelles par un tel préhenseur 1, ce posage 200 comporte, sous une face d'appui 201 agencée pour recevoir une rondelle ou une pile de rondelles, et une gorge 202 agencée pour autoriser l'insertion radiale centripète de doigts 31, 32, que comportent des mors 3 du préhenseur1, pour la saisie sans déformation d'au moins une rondelle déposée sur la face d'appui 201.

L'invention ne concerne pas l'utilisation d'un tel moyen de manutention 100 pour le chassage et/ou le déchassage d'une rondelle d'un sous-ensemble horloger sans déformation de la rondelle.

En somme, l'invention permet de résoudre le problème technique de mise à plat des rondelles, pour toutes les rondelles d'ébauches horlogères, la pose avec chassage en buté mécanique sur un posage définissant une position d'usinage, ainsi que la prise par-dessous pour son extraction du posage. Les fonctions de chassage et déchassage des rondelles sur une position d'usinage sont ainsi réalisées par un seul appareil, qui de plus est léger et très compact, avec une faible inertie, ce qui est parfaitement compatible avec sa manipulation par un robot dans des temps de transit de quelques dixièmes de seconde.

## Revendications

1. Préhenseur (1) universel pour rondelles d'horlogerie, agencé pour être fixé ou intégré à un moyen de manutention ou à un bras de robot, et comportant une pince (2) avec une pluralité de mors (3) mobiles radialement de façon concentrique autour d'un axe principal (D) et qui sont saillants par rapport à un plateau d'appui (4) que comporte ledit préhenseur (1) et qui est mobile selon la direction dudit axe principal (D), chaque dit mors (3) comportant au moins une première surface radiale (5) agencée pour un appui radial sur le chant d'une rondelle, ledit plateau d'appui (4) comportant au moins une première surface axiale (41) agencée pour un appui axial sur une surface plate d'une rondelle, tel que ledit préhenseur (1) comporte des moyens de manoeuvre axiaux dudit plateau d'appui (4) pour maintenir ledit plateau d'appui (4) sur un posage avec un effort taré et inférieur ou égal à 300 N, et qui sont combinés avec au moins un capteur de force selon ledit axe principal (D) qui est agencé pour mesurer l'effort en traction et/ou compression, et le comparer audit effort taré ou à la valeur de 300N, tel que chaque dit mors (3) est aussi mobile axialement selon la direction dudit axe principal (D) par rapport audit plateau d'appui (4), ou inversement, et **caractérisé en ce que** la course axiale relative entre lesdits mors (3) et ledit plateau d'appui (4) est réglable pour s'adapter à chaque épaisseur de rondelle.

2. Préhenseur (1) selon la revendication 1, **caractérisé en ce que** chaque dit mors (3) comporte au moins une deuxième surface axiale (6) agencée pour un appui axial sur une surface plate d'une rondelle

3. Préhenseur (1) selon la revendication 2, **caractérisé en ce que** chaque dit mors (3) comporte une surface de centrage (7) entre ladite deuxième surface axiale (6) et ledit plateau d'appui (4).

4. Préhenseur (1) selon la revendication 2 ou 3, **caractérisé en ce que** toutes les dites deuxièmes surfaces axiales (6) sont agencées pour saisir une même rondelle au niveau d'un même plan perpendiculaire audit axe principal (D).

5. Préhenseur (1) selon l'une des revendications 2 à 4, **caractérisé en ce que** chaque dit mors (3) comporte un premier doigt (31) unique saillant radialement vers ledit axe principal (D) et comportant une dite première surface radiale (5), et comportant une dite deuxième surface axiale (6) entre ladite première surface radiale (5) et ledit plateau d'appui (4).

6. Préhenseur (1) selon l'une des revendications 1 à 5, **caractérisé en ce que** lesdits mors (3) sont agencés pour maintenir une rondelle en appui sur ledit plateau d'appui (4), et pour exercer un effort résistant à la poussée ou à la traction exercée par un robot.

7. Préhenseur (1) selon l'une des revendications 1 à 6, **caractérisé en ce que** la course axiale dudit plateau d'appui (4) est réglable pour s'adapter à chaque type de rondelle ou à chaque épaisseur de rondelle.

8. Préhenseur (1) selon l'une des revendications 1 à 7, **caractérisé en ce que** ledit préhenseur (1) comporte des commandes électriques (10) pour la manoeuvre radiale desdits mors (3), et pour la manoeuvre axiale dudit plateau d'appui (4).

9. Préhenseur (1) selon la revendication 8, **caractérisé en ce que** ledit préhenseur (1) comporte des commandes électriques (10) pour la manoeuvre axiale desdits mors (3).

10. Préhenseur (1) selon la revendication 8 ou 9, **caractérisé en ce que** ledit préhenseur (1) comporte au moins un encodeur pour un moteur que comporte une dite commande électrique (10), pour l'adaptation de l'épaisseur et/ou du diamètre d'une rondelle, agencé pour donner auxdites commandes électriques (10) des instructions de course minimale et maximale.

11. Préhenseur (1) selon l'une des revendications 8 à 10, **caractérisé en ce que** ledit préhenseur (1) comporte des moyens de mesure (11) pour l'adaptation de l'épaisseur et/ou du diamètre d'une rondelle, agencés pour donner auxdites commandes électriques (10) des instructions de course minimale et maximale.

12. Préhenseur (1) selon l'une des revendications 8 à 11, **caractérisé en ce que** lesdites commandes électriques (10) sont paramétrables en position et/ou en vitesse et/ou en accélération et/ou en couple et/ou en force d'appui.

13. Préhenseur (1) selon l'une des revendications 8 à 12, **caractérisé en ce que** lesdites commandes électriques (10) sont agencées pour effectuer un mouvement consistant à écarter radialement lesdits mors (3) pour déposer une rondelle sur un posage, et à déplacer axialement ledit plateau d'appui (4) selon la direction dudit axe principal (D), pour compenser les différences d'épaisseur entre les différentes rondelles.

14. Préhenseur (1) selon l'une des revendications 8 à 13, **caractérisé en ce que** lesdites commandes électriques (10) sont agencées pour effectuer un mouvement séquentiel consistant à effectuer l'écartement radial desdits mors (3) pour déposer une rondelle sur un posage, et pour déplacer axialement ledit plateau d'appui (4).

15. Moyen de manutention (100) de rondelles d'horlogerie, comportant au moins un préhenseur (1) selon l'une des revendications 1 à 13, **caractérisé en ce que** ledit moyen de manutention (100) comporte au moins un robot (102) avec un bras de robot (101) porteur d'au moins un dit préhenseur (1), et **en ce que** ledit robot (102) est agencé pour chasser ou déchasser une rondelle par un mouvement selon la direction dudit axe principal (D).

16. Moyen de manutention (100) selon la revendication 15, **caractérisé en ce que** ledit moyen de manutention (100) comporte au moins un moyen de vision, qui est agencé pour identifier la face supérieure ou inférieure d'une ébauche en amont dudit préhenseur (1) et pour commander une manoeuvre de retournement par un manipulateur annexe, et/ou pour déterminer l'orientation angulaire d'une ébauche en amont dudit préhenseur (1) selon la position d'encoche et/ou perçage que comporte ladite ébauche et pour commander une manoeuvre de rotation angulaire par un manipulateur annexe, et/ou pour lire sur une dite ébauche en amont dudit préhenseur (1) un marquage d'identification pour déclencher des paramètres de fonctionnement dudit préhenseur (1).

## Patentansprüche

1. Universalgreifer (1) für Uhrenunterlegscheiben, der dafür ausgelegt ist, befestigt zu werden oder in ein Handhabungsmittel oder einen Roboterarm integriert zu werden, und der eine Zange (2) mit mehreren Backen (3) aufweist, die radial konzentrisch um eine Hauptachse (D) beweglich sind und die in Bezug auf eine Stützplatte (4) vorstehen, die der Greifer (1) umfasst und die in Richtung der Hauptachse (D) beweglich ist, wobei jede der Backen (3) mindestens eine erste radiale Fläche (5) aufweist, die für eine radiale Anlage an der Kante einer Unterlegscheibe angeordnet ist, wobei die Stützplatte (4) mindestens eine erste axiale Fläche (41) aufweist, die für eine axiale Anlage an einer flachen Fläche einer Unterlegscheibe ausgelegt ist, wobei der Greifer (1) axiale Manövriermittel der Stützplatte (4) umfasst, um die Stützplatte (4) auf einem Sitz mit einer Vorbelastungskraft kleiner oder gleich 300 N zu halten, die mit mindestens einem Kraftsensor entlang der Hauptachse (D) kombiniert sind, der dafür ausgelegt ist, die Zug- und/oder Druckkraft zu messen und sie mit der Vorbelastungskraft oder mit dem Wert von 300 N zu vergleichen, derart, dass jede Backe (3) auch axial in der Richtung der Hauptachse (D) in Bezug auf die Stützplatte (4) beweglich ist, oder umgekehrt, **dadurch gekennzeichnet, dass** der relative axiale Hub zwischen den Backen (3) und der Stützplatte (4) einstellbar ist, um sich an jede Dicke der Unterlegscheibe anzupassen.

2. Greifer (1) nach Anspruch 1, **dadurch gekennzeichnet, dass** jede Backe (3) mindestens eine zweite axiale Fläche (6) aufweist, die dafür ausgelegt ist, sich auf einer flachen Fläche einer Unterlegscheibe axial abzustützen.

3. Greifer (1) nach Anspruch 2, **dadurch gekennzeichnet, dass** jede Backe (3) eine Zentrierfläche (7) zwischen der zweiten axialen Fläche (6) und der Stützplatte (4) aufweist.

4. Greifer (1) nach Anspruch 2 oder 3, **dadurch gekennzeichnet, dass** alle zweiten axialen Flächen (6) so angeordnet sind, dass sie eine gleiche Unterlegscheibe an einer gleichen Ebene senkrecht zur Hauptachse (D) einspannen.

5. Greifer (1) nach einem der Ansprüche 2 bis 4, **dadurch gekennzeichnet, dass** jede der Backen (3) einen einzigen ersten Finger (31) aufweist, der radial zur Hauptachse (D) vorsteht und eine erste radiale Fläche (5) aufweist, und eine zweite axiale Fläche (6) zwischen der ersten radialen Fläche (5) und der Stützplatte (4) aufweist.

6. Greifer (1) nach einem der Ansprüche 1 bis 5, **dadurch gekennzeichnet, dass** die Backen (3) dafür ausgelegt sind, eine Unterlegscheibe, die auf der Stützplatte (4) aufliegt, zu halten und eine Kraft auszuüben, die dem von einem Roboter ausgeübten Schub oder Zug widersteht.

7. Greifer (1) nach einem der Ansprüche 1 bis 6, **dadurch gekennzeichnet, dass** der axiale Hub der Stützplatte (4) einstellbar ist, um sich an jede Art von Unterlegscheibe oder an jede Dicke der Unterlegscheibe anzupassen.

8. Greifer (1) nach einem der Ansprüche 1 bis 7, **dadurch gekennzeichnet, dass** der Greifer (1) elektrische Steuerungen (10) für die radiale Betätigung der Backen (3) und für die axiale Betätigung der Stützplatte (4) aufweist.

9. Greifer (1) nach Anspruch 8, **dadurch gekennzeichnet, dass** der Greifer (1) elektrische Steuerungen (10) für die axiale Betätigung der Backen (3) aufweist.

10. Greifer (1) nach Anspruch 8 oder 9, **dadurch gekennzeichnet, dass** der Greifer (1) mindestens einen Drehgeber für einen Motor aufweist, den eine elektrische Steuerung (10) enthält, zur Anpassung der Dicke und/oder des Durchmessers einer Unterlegscheibe, der dafür ausgelegt ist, den elektrischen Steuerungen (10) Anweisungen für den minimalen und maximalen Hub zu geben.

11. Greifer (1) nach einem der Ansprüche 8 bis 10, **dadurch gekennzeichnet, dass** der Greifer (1) Messmittel (11) zur Anpassung der Dicke und/oder des Durchmessers einer Unterlegscheibe aufweist, die dafür ausgelegt sind, den elektrischen Steuerungen (10) Anweisungen für den minimalen und den maximalen Hub zu geben.

12. Greifer (1) nach einem der Ansprüche 8 bis 11, **dadurch gekennzeichnet, dass** die elektrischen Steuerungen (10) in Position und/oder Geschwindigkeit und/oder Beschleunigung und/oder Drehmoment und/oder Andrucckraft parametrierbar sind.

13. Greifer (1) nach einem der Ansprüche 8 bis 12, **dadurch gekennzeichnet, dass** die elektrischen Steuerungen (10) dafür ausgelegt sind, eine Bewegung auszuführen, die darin besteht, die Backen (3) radial zu spreizen, um eine Unterlegscheibe auf einer Auflage abzulegen, und die Stützplatte (4) axial in Richtung der Hauptachse (D) zu verschieben, um die Unterschiede in der Dicke zwischen den verschiedenen Unterlegscheiben auszugleichen.

14. Greifer (1) nach einem der Ansprüche 8 bis 13, **dadurch gekennzeichnet, dass** die elektrischen Steuerungen (10) dafür ausgelegt sind, eine Bewegung sequentiell auszuführen, bestehend aus der Durchführung der radialen Spreizung der Backen (3) zum Ablegen einer Unterlegscheibe auf einem Sitz und zum axialen Bewegen der Stützplatte (4).

15. Handhabungsmittel (100) für Uhrenunterlegscheiben, das mindestens einen Greifer (1) nach einem der Ansprüche 1 bis 13 umfasst, **dadurch gekennzeichnet, dass** das Handhabungsmittel (100) mindestens einen Roboter (102) mit einem Roboterarm (101) umfasst, der mindestens einen der Greifer (1) trägt, und dass der Roboter (102) dafür ausgelegt ist, eine Unterlegscheibe durch eine Bewegung in Richtung der Hauptachse (D) einzutreiben oder auszutreiben.

16. Handhabungsmittel (100) nach Anspruch 15, **dadurch gekennzeichnet, dass** das Handhabungsmittel (100) mindestens ein Sichtmittel umfasst, das dafür ausgelegt ist, die obere oder untere Seite eines Rohlings vor dem Greifer (1) zu identifizieren und ein Wendemanöver durch einen Hilfsmanipulator zu steuern und/oder um die Winkelausrichtung eines Rohlings vor dem Greifer (1) gemäß der Position der Kerbe und/oder einer Lochung, die der Rohling aufweist, zu bestimmen und um eine Winkeldrehung durch einen Zusatzmanipulator zu steuern und/oder um auf einem Rohling vor dem Greifer (1) eine Identifikationsmarkierung zu lesen, um Funktionsparameter des Greifers (1) auszulösen.

## Claims

1. A universal gripper (1) for timepiece washers, arranged to be fastened to or integrated into a handling means or a robot arm, and including a clamp (2) with a plurality of jaws (3) radially concentrically movable about a main axis (D) and which are protruding relative to a rest tray (4) that said gripper (1) includes and which is movable along the direction of said main axis (D), each of said jaws (3) including at least a first radial surface (5) arranged for radially resting on the edge of a washer, said rest tray (4) including at least a first axial surface (41) arranged for axially resting on a flat surface of a washer, such that said gripper (1) includes axial means for operating said rest tray (4) to hold said rest tray (4) on a support with a calibrated force and lower than or equal to 300N, and which are combined with at least one force sensor along said main axis (D) which is arranged to measure a tensile and/or compression force, and to compare it to said calibrated force or to the value of 300N, such that each said jaw (3) is also axially movable along the direction of said main axis (D) relative to said rest tray (4), or conversely, and **characterised in that** the relative axial stroke between said jaws (3) and said rest tray (4) is adjustable to adapt to each washer thickness.

2. The gripper (1) according to claim 1, **characterised in that** each of said jaws (3) includes at least a second axial surface (6) arranged for axially resting on a flat surface of a washer.

3. The gripper (1) according to claim 2, **characterised in that** each of said jaws (3) includes a centering surface (7) between said second axial surface (6) and said rest tray (4).

4. The gripper (1) according to claim 2 or 3, **characterised in that** all said second axial surfaces (6) are arranged to grip a same washer at a same plane perpendicular to said main axis (D).

5. The gripper (1) according to one of claims 2 to 4, **characterised in that** each of said jaws (3) includes a first single finger (31) radially projecting to said main axis (D) and including a said first radial surface (5), and including a said second axial surface (6) between said first radial surface (5) and said rest tray (4).

6. The gripper (1) according to one of claims 1 to 5, **characterised in that** said jaws (3) are arranged to hold a washer resting on said rest tray (4), and to exert a force resisting the thrust or the tension exerted by a robot.

7. The gripper (1) according to one of claims 1 to 6, **characterised in that** the axial stroke of said rest tray (4) is adjustable to adapt to each washer type or to each washer thickness.

8. The gripper (1) according to one of claims 1 to 7, **characterised in that** said gripper (1) includes electric commands (10) for radially operating said jaws (3), and for axially operating said rest tray (4).

9. The gripper (1) according to claim 8, **characterised in that** said gripper (1) includes electric commands (10) for axially operating said jaws (3).

10. The gripper (1) according to claim 8 or 9, **characterised in that** said gripper (1) includes at least one encoder for a motor that one said electric command (10) includes, for adapting the thickness and/or the diameter of a washer, arranged to give said electric commands (10) minimum or maximum stroke instructions.

11. The gripper (1) according to one of claims 8 to 10, **characterised in that** said gripper (1) includes measurement means (11) for adapting the thickness and/or the diameter of a washer, arranged to give said electric commands (10) minimum or maximum stroke instructions.

12. The gripper (1) according to one of claims 8 to 11, **characterised in that** said electric commands (10) are parameterable in position and/or speed and/or acceleration and/or torque and/or rest force.

13. The gripper (1) according to one of claims 8 to 12, **characterised in that** said electric commands (10) are arranged to perform a movement of radially spacing said jaws (3) apart to deposit a washer onto a support, and of axially moving said rest tray (4) along the direction of said main axis (D), to compensate for thickness differences between different washers.

14. The gripper (1) according to one of claims 8 to 13, **characterised in that** said electric commands (10) are arranged to perform a sequential movement of performing radial spacing apart of said jaws (3) to deposit a washer onto a support, and to axially move said rest tray (4).

15. A means for handling (100) timepiece washers, including at least one gripper (1) according to one of claims 1 to 13, **characterised in that** said handling means (100) includes at least one robot (102) with a robot arm (101) carrying at least one said gripper (1), and **in that** said robot (102) is arranged to drive in or drive out a washer via a movement along the direction of said main axis (D).

16. A handling means (100) according to claim 15, **characterised in that** said handling means (100) includes at least one viewing means, which is arranged to identify the upper or lower face of a blank upstream of said gripper (1) and to control a turning over operation by an auxiliary manipulator, and/or to determine angular orientation of a blank upstream of said gripper (1) according to the notch and/or drilling position that said blank includes and to control an angular rotation operation by an auxiliary manipulator, and/or to read on one said blank upstream of the said gripper (1) an identification marking to trigger operating parameters of said gripper (1).
